# EUROPÄISCHE PATENTSCHRIFT

(11) **EP 3 924 307 B1**
(45) Veröffentlichungstag und Bekanntmachung des Hinweises auf die Patenterteilung: **06.12.2023**
(21) Anmeldenummer: 20705914.8
(22) Anmeldetag: 13.02.2020
(51) Int. Cl.: C03B 29/02, C03C 23/00

(54) **VERFAHREN ZUM ERHÖHEN DER FESTIGKEIT EINES GLASSUBSTRATES**
METHOD FOR INCREASING THE STRENGTH OF A GLASS SUBSTRATE
PROCÉDÉ POUR ACCROÎTRE LA RÉSISTANCE D'UN SUBSTRAT DE VERRE

(30) Priorität: 16.02.2019 DE 102019103947; 17.12.2019 DE 102019134818
(43) Veröffentlichungstag der Anmeldung: 22.12.2021
(73) Patentinhaber: Fraunhofer-Gesellschaft zur Förderung der angewandten Forschung e.V., 80686 München (DE)
(72) Erfinder: JUNGHÄHNEL, Manuela, 01277 Dresden (DE); WESTPHALEN, Jasper, 01277 Dresden (DE); PREUSSNER, Thomas, 01277 Dresden (DE); WALTHER, Wiebke, 01277 Dresden (DE)
(86) Internationale Anmeldenummer: PCT/EP2020/053725
(87) Internationale Veröffentlichungsnummer: WO 2020/165325

(56) Entgegenhaltungen:
- WO-A1-2015/098388
- US-A1- 2006 032 842
- US-A1- 2007 256 703

## Beschreibung

Die Erfindung betrifft ein Verfahren zum Erhöhen der Festigkeit von Glassubstraten, welche insbesondere plattenförmig oder bandförmig ausgebildet sind.

Beispielsweise in der Bauindustrie, beim Automobilbau und bei Photovoltaikanwendungen werden Glassubstrate mit einer hohen Festigkeit benötigt, um eine Langlebigkeit entsprechender Produkte zu ermöglichen.

Die Festigkeit von Glasgegenständen, zum Beispiel Glasscheiben oder Glasflaschen, wird maßgeblich durch die Oberflächengüte bestimmt. Je weniger Fehler, wie zum Beispiel Mikrorisse oder Kratzer, sich auf der Glasoberfläche befinden, desto höher ist die erreichbare Festigkeit des Glasgegenstandes.

Es gibt verschiedene Möglichkeiten, die Oberfläche von Glasobjekten zu veredeln und auf diese Weise die Fehlerdichte zu verringern bzw. die Festigkeit der Glasobjekte zu erhöhen. So sind zum Beispiel chemische, diffusionsgetriebene Austauschprozesse bekannt, bei denen Glasobjekte in eine Salzschmelze getaucht und dabei Natrium-Ionen aus der Glasoberfläche gegen Kalium-Ionen ausgetauscht werden. Durch den Einbau der größeren Kalium-Ionen anstelle der Natrium-Ionen werden innerhalb der Oberflächenschicht Druckspannungen erzeugt, welche die Festigkeit des Glases erhöhen. Bei dieser Vorgehensweise können Festigkeiten von Gläsern im Bereich von 500 MPa erreicht werden. Nachteilig wirkt sich hierbei aus, dass die diffusionsgetriebenen Austauschprozesse sehr lange dauern und Prozesszeiten von bis zu 24 Stunden benötigen. Außerdem ist die Reinigung und Wiedergewinnung der hierbei verwendeten Salzschmelze sehr zeit- und kostenintensiv.

In EP 2 319 814 A1 wird vorgeschlagen, ein Glasprodukt bei einer Temperatur oberhalb seiner oberen Kühltemperatur in eine Salzschmelze einzutauchen, um einen lonenaustausch zu vollziehen. Auf diese Weise kann der Austauschprozess zeitlich verkürzt werden. Nachteilig bleibt aber auch bei dieser Vorgehensweise das zeit- und kostenintensive Aufbereiten der verwendeten Salzschmelze.

Des Weiteren sind auch thermische Verfahren zum Vorspannen von Gläsern bekannt (DE 2 049 719 A), bei denen ein Glassubstrat auf eine Temperatur oberhalb seiner Transformationstemperatur erwärmt und anschließend schlagartig abgeschreckt wird. Hierbei wird das Glasnetzwerk an der Oberfläche des Glases im aufgeweiteten Zustand eingefroren, während sich der Kern des Glases zusammenziehen kann. Durch die unterschiedlichen Ausdehnungskoeffizienten von Oberfläche und Kern werden in der Glasoberfläche Druckspannungen erzeugt, die festigkeitssteigernd wirken. Das Abschrecken der Glassubstrate kann durch gasförmige, flüssige oder feste Medien erfolgen. Nachteilig bei dieser Vorgehensweise ist zum Beispiel, dass die erreichbare Festigkeit geringer als beim chemischen Vorspannen ist. Bei dieser Vorgehensweise entstehen unkontrolliert und zufällig Nickelsulfidkeime, welche später zu Spontanbrüchen eines Glases infolge einer Umkristallisation führen können. Je dünner ein Glassubstrat ausgebildet ist, desto höhere Temperaturgradienten und Abkühlgeschwindigkeiten müssen erzeugt werden, weshalb diese Verfahren für Glasdicken unter 3 mm bisher nicht geeignet sind.

Die Festigkeit von Glassubstraten kann ferner durch mechanisches Polieren der Glasoberfläche verbessert werden, wie es zum Beispiel in DE 10 2010 033 041 A1 dargelegt ist. Ebenfalls bekannt ist es, ein Glassubstrat mittels einer Brennerflamme zu erwärmen, um leicht flüchtige Bestandteile aus dem Glassubstrat zu verdampfen (EP 2 204 354 A2) und gleichzeitig Mikrorisse im Glas auszuheilen, womit die Festigkeit des Glases erhöht werden kann. Ein Nachteil dieser Methode besteht darin, dass sich die verdampften Bestandteile des Glases in kühleren Bereichen in der Nähe der erhitzten Zonen des Glasgegenstandes niederschlagen. Durch den direkten Kontakt des Glases mit der Flamme kann es zudem zu lokalen Überhitzungen kommen. Außerdem wird bei der flächigen Behandlung von Glas aufwendige Brenner- und Kühltechnik benötigt. Bei der Behandlung von großflächigen Glassubstraten entstehen große Mengen an Abgas, die aus einem Prozessraum abgeführt und gereinigt werden müssen.

In WO 2015/098388 A1 sind Verfahren beschrieben, bei welchen die Schnittränder von geschnittenen Glassubstraten mit einer Infrarotstrahlung beaufschlagt werden, um die Schnittränder kurzzeitig aufzuschmelzen und dadurch die Mikrorisse an den Schnitträndern auszuheilen. Hinweise zum Ausheilen von Mikrorissen an der Oberfläche eines Glassubstrates außerhalb der Schnittränder sind aus dieser Schrift nicht bekannt.

Aus den Schriften US 2006/0032842 A1 und US 2007/0256703 A1 sind ferner Verfahren bekannt, bei denen Verunreinigungen auf der Oberfläche von Glassubstraten entfernt werden, indem die verunreinigten Flächenbereiche mit einer elektromagnetischen Strahlung überstrichen werden. Als elektromagnetische Strahlung werden hierfür vorgeschlagen: Laserstrahlen, Röntgenstrahlen, Elektronenstrahlen, Neutronenstrahlen oder Gammastrahlen.

Der Erfindung liegt daher das technische Problem zugrunde, ein Verfahren zum Erhöhen der Festigkeit von Glassubstraten zu schaffen, mittels dessen die Nachteile aus dem Stand der Technik überwunden werden können. Insbesondere soll es mit dem erfindungsgemäßen Verfahren auch möglich sein, die Festigkeit von dünnwandigen Glassubstraten mit einer Dicke kleiner als 3 mm zu erhöhen.

Die Lösung des technischen Problems ergibt sich durch Gegenstände mit den Merkmalen des Patentanspruchs 1. Weitere vorteilhafte Ausgestaltungen der Erfindung ergeben sich aus den abhängigen Ansprüchen.

Überraschend hat sich gezeigt, dass die Festigkeit eines plattenförmigen oder bandförmigen Glassubstrates erhöht werden kann, wenn das Glassubstrat mit Lichtblitzen beaufschlagt wird. Beim erfindungsgemäßen Verfahren zum Erhöhen der Festigkeit eines plattenförmigen oder bandförmigen Glassubstrates wird deshalb das Glassubstrat mittels mindestens eines Pulses einer elektromagnetischen Strahlung im Wellenlängenbereich von 180 nm bis 1100 nm beaufschlagt. Die Blitzeinwirkung auf das Glassubstrat bewirkt eine lokale Temperaturerhöhung in Oberflächenbereichen des Glassubstrates. Hierbei treten leicht flüchtige Bestandteile aus dem Glassubstrat aus und vermutlich werden dabei auch Mikrorisse im Glassubstrat ausgeheilt, worin die Festigkeitserhöhung begründet sein könnte. Mit dem erfindungsgemäßen Verfahren ist es gelungen, die Festigkeit von plattenförmigen und bandförmigen Glassubstraten, bezogen auf eine Biegebeanspruchung, um über 50 % zu erhöhen. Für das erfindungsgemäße Verfahren können zum Beispiel alkalihaltige Silikatgläser oder Borosilikatgläser als Glassubstrat verwendet werden.

Besonders geeignet ist das erfindungsgemäße Verfahren für großflächige, plattenförmige und bandförmige Glassubstrate mit geringer Substratdicke. Damit insbesondere bei dünnen Gläsern ein hierfür erforderlicher Energieeintrag in ein Glassubstrat erfolgen kann, sind Blitzpulse mit einer Strahlungsbandbreite von mindestens 100 nm für das erfindungsgemäße Verfahren geeignet. Hierbei können auch Glassubstrate mit einer Substratdicke kleiner als 3 mm behandelt werden. Bei einer Ausführungsform wird ein Glassubstrat mit einer Dicke von maximal 24 mm verwendet.

Die für das erfindungsgemäße Verfahren erforderliche elektromagnetische Strahlung wird mittels einer Gasentlandungslampe erzeugt. Xenon-Blitzlampen sind hierfür zum Beispiel geeignet. Ein Xenon-Blitzlampe erzeugt üblicherweise eine elektromagnetische Strahlung im Wellenlängenbereich von etwa 180 nm bis 1100 nm und deren Blitzpulse weisen somit eine Strahlungsbandbreitevon etwa 920 nm auf. Deshalb sind Xenon-Blitzlampen auch für das erfindungsgemäße Härten von Gläsern mit einer Glasdicke von kleiner als 3 mm besonders geeignet.

Das Beaufschlagen eines plattenförmigen oder bandförmigen Glassubstrates mit mindestens einem Blitzpuls kann sowohl als statischer Prozess durchgeführt werden als auch als dynamischer Prozess, bei welchem die lichtblitzerzeugende Einrichtung und das zu behandelnde Glassubstrat eine Relativgeschwindigkeit zueinander aufweisen.

Das erfindungsgemäße Verfahren kann mit einem relativ geringen Aufwand in den Produktionsprozess von Glassubstraten integriert werden und kann sich zum Beispiel unmittelbar nach der Glasfertigung anschließen. Auch können die Umgebungsbedingungen beim erfindungsgemäßen Verfahren verschiedenartig gestaltet werden. So ist es zum Beispiel möglich, das erfindungsgemäße Verfahren an Atmosphärenbedingungen, im Vakuum oder unter Anwesenheit eines Schutzgases durchzuführen. Wird das erfindungsgemäße Verfahren innerhalb einer Vakuumkammer durchgeführt, können die Pumpen zum Aufrechterhalten des Vakuums in der Vakuumkammer gleichzeitig verwendet werden, um die aus den Glassubstraten austretenden flüchtigen Bestandteile aus der Vakuumkammer abzupumpen. Vorteilhaft beim Durchführen des erfindungsgemäßen Verfahrens, bei welchem sich ein zu behandelndes Glassubstrat innerhalb einer Vakuumkammer befindet, ist ebenfalls, dass die den mindestens einen Blitzpuls erzeugende Einrichtung entweder innerhalb oder auch außerhalb der Vakuumkammer angeordnet sein kann. Die Blitzpuls erzeugende Einrichtung kann so zum Beispiel außerhalb der Vakuumkammer vor einem Fenster innerhalb einer Vakuumkammerwandung angeordnet sein und das Glassubstrat innerhalb der Vakuumkammer durch das Fenster hindurch mit dem mindestens einen Blitzpuls beaufschlagen.

Bei einer Vielzahl von Anwendungsfällen ist es hinreichend, wenn das Glassubstrat vor dem Einwirken des mindestens einen Blitzpulses eine Temperatur entsprechend der Raumtemperatur aufweist. Ein Glassubstrat kann aber auch vor dem Einwirken des mindestens einen Blitzpulses auf eine Temperatur von maximal 200 °C erwärmt werden, wodurch die mit dem mindestens einen Blitzpuls in das Glassubstrat einzutragende Energiemenge reduziert werden kann.

Bei einer Ausführungsform der Erfindung wird die Dauer des mindestens einen Blitzpulses im Bereich von 0,2 ms bis 100 ms eingestellt.

Ein wesentlicher Parameter für das erfindungsgemäße Verfahren ist die Pulsenergiedichte des mindestens einen Blitzpulses. Wird die Pulsenergiedichte zu gering gewählt, erhöht dies nicht die Festigkeit eines Glassubstrates. Bei einer zu hohen Pulsenergiedichte kann das Glassubstrat anschmelzen, wodurch die Festigkeit des Glassubstrates verringert werden oder das Glassubstrat im Extremfall auch zerstört werden kann. Beim erfindungsgemäßen Verfahren wird die Pulsenergiedichte des mindestens einen Blitzpulses deshalb im Bereich von 0,1 Jcm⁻² bis 100 Jcm⁻² eingestellt. Besonders gute Ergebnisse beim Erhöhen der Festigkeit von Glassubstraten konnten erzielt werden, wenn die Pulsenergiedichte des mindestens einen Blitzpulses in einem Bereich von 1 Jcm⁻² bis 50 Jcm⁻² eingestellt wurde.

Bei einer weiteren Ausführungsform der Erfindung wird hinter dem Glassubstrat und/oder hinter der Einrichtung zum Erzeugen des mindestens einen Blitzpulses der elektromagnetischen Strahlung ein Reflektor für die elektromagnetische Strahlung angeordnet.

Die vorliegende Erfindung wird nachfolgend anhand von Ausführungsbeispielen näher erläutert. Die Fig. zeigen:
- Fig. 1: eine zum Ausführen des erfindungsgemäßen Verfahrens geeignete Vorrichtung in einer schematischen Darstellung;
- Fig. 2: eine zum Ausführen des erfindungsgemäßen Verfahrens geeignete alternative Vorrichtung in einer schematischen Darstellung.

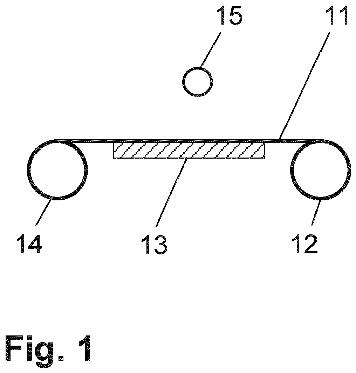

Mittels einer in Fig. 1 dargestellten Vorrichtung soll die Festigkeit eines bandförmigen Glassubstrates 11 erhöht werden. Hierzu wird das bandförmige Glassubstrat 11 unter Atmosphärenbedingungen von einer ersten Rolle 12 abgewickelt, über einen Substratträger 13 geführt und auf einer zweiten Rolle 14 aufgewickelt. Während das bandförmige Glassubstrat über den Substratträger 13 geführt wird, wird das bandförmige Glassubstrat 11 mit elektromagnetischer Strahlung einer als Xenon-Blitzlampe ausgebildeten Gasentladungslampe 15 beaufschlagt. Die Vorschubgeschwindigkeit des bandförmigen Glassubstrates 11 und die Blitzdauer der Gasentladungslampe 15 sind bei dem beschriebenen Ausführungsbeispiel derart aufeinander abgestimmt, dass jeder Oberflächenbereich des bandförmigen Glassubstrates 11 im Wesentlichen mit der elektromagnetischen Strahlung lediglich eines Blitzes der Gasentladungslampe 15 beaufschlagt wird. Alternativ können die Vorschubgeschwindigkeit des bandförmigen Glassubstrates 11 und die Blitzdauer der Gasentladungslampe 15 aber auch derart aufeinander abgestimmt sein, dass jeder Oberflächenbereich des bandförmigen Glassubstrates 11 mit der elektromagnetischen Strahlung mehrerer Blitze der Gasentladungslampe 15 beaufschlagt wird. Das Beaufschlagen des bandförmigen Glassubstrates 11 mit Lichtblitzen führt zur einer lokalen Temperaturerhöhung in Oberflächenbereichen des Glassubstrates, wodurch flüchtige Bestandteile aus dem Glassubstrat ausgetrieben werden und vermutlich auch Mikrorisse ausgeheilt werden, was zum Erhöhen der Festigkeit des bandförmigen Glassubstrates führt.

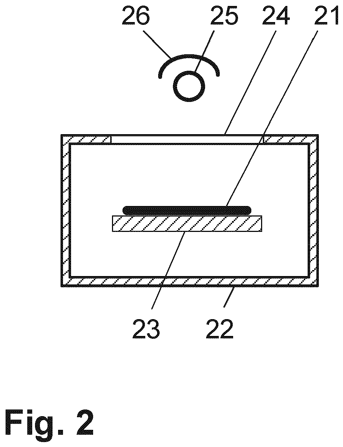

In Fig. 2 ist eine alternative Vorrichtung schematisch dargestellt, mittels der die Festigkeit von plattenförmigen Glassubstraten 21 aus einem Alkali-Erdalkali-Silikatglas mit einer Glasdicke von 3 mm erhöht werden soll. Ein Glassubstrat 21 befindet sich innerhalb einer Vakuumkammer 22 auf einem Substratträger 23. Vor einem Quarzglasfenster 24 innerhalb einer Wandung der Vakuumkammer 22 ist eine als Xenon-Blitzlampe ausgebildete Gasentladungslampe 25 angeordnet. Die Gasentladungslampe 25 erzeugt Pulse elektromagnetischer Strahlung, welche das Quarzglasfenster 24 durchdringt und danach auf das Glassubstrat 21 auftrifft. Bei dem zu Fig. 2 beschriebenen Ausführungsbeispiel wird jedes Glassubstrat 21 lediglich mit der elektromagnetischen Strahlung eines Blitzpulses der Gasentladungslampe 25 beaufschlagt. Alternativ kann aber auch ein Glassubstrat 21 mit mehreren Blitzpulsen der Gasentladungslampe 25 beaufschlagt werden, wobei verschiedene aneinandergrenzende oder sich überlappende Oberflächenbereiche eines Glassubstrates 21 mit einem oder mehreren Blitzpulsen der Gasentladungslampe 25 beaufschlagt werden können.

So wird bei einer weiteren alternativen Ausführungsform zunächst auch nur ein Teilbereich der Oberfläche des Glassubstrates 21 mit einem oder mehreren Blitzpulsen der Gasentladungslampe 25 beaufschlagt und danach ein Positionswechsel von Glassubstrat 21 und/oder Gasentladungslampe 25 vollzogen, wonach dann ein anderer Teilbereich der Oberfläche des Glassubstrates 21 mit einem oder mehreren Blitzpulsen der Gasentladungslampe 25 beaufschlagt wird.

Zur Vorrichtung gemäß Fig. 2 gehört ferner ein Reflektor 26, welcher in Bezug auf das Glassubstrat 21 hinter der Gasentladungslampe 25 angeordnet ist und welcher den Anteil der von der Gasentladungslampe 25 erzeugten und Richtung Glassubstrat 21 abgestrahlten, elektromagnetischen Strahlung erhöht.

In Abhängigkeit von der Art und der Dicke eines verwendeten Glassubstrates 21 kann es hinreichend sein, wenn lediglich eine Seite des Glassubstrates 21 mit elektromagnetischer Strahlung der Gasentladungslampe 25 beaufschlagt wird, um eine erwünschte Festigkeitserhöhung zu erzielen. Es ist aber auch möglich, zunächst eine Seite des Glassubstrates 21 mit mindestens einem Blitzpuls zu beaufschlagen und anschließend die andere Seite des Glassubstrates 21. Des Weiteren kann auch der Substratträger 23 als Reflektor für die von der Gasentladungslampe 25 erzeugte elektromagnetische Strahlung ausgebildet werden, um den Strahlengang der elektromagnetischen Strahlung innerhalb des Glassubstrates zu verlängern und die Wirkung somit zu verstärken.

Mit der in Fig. 2 dargestellten Versuchsanordnung wurde eine Vielzahl von Glassubstraten 21 mit jeweils einem Blitzpuls der Gasentladungslampe 25 mit einer unterschiedlichen Pulsenergiedichte bestrahlt. Dabei wurden jedoch immer mindestens 30 Glassubstrate mit der gleichen Pulsenergiedichte beaufschlagt, anschließend einer Festigkeitsprüfung unterzogen und für jeden Pulsenergiedichtewert ein Mittelwert für die Festigkeit der Glassubstrate 21 einer Charge ermittelt. Die Festigkeitsprüfung der Substrate 21 erfolgte mit einem Doppelringbiegeversuch nach DIN EN 1288-5: 2000-09. Die Ergebnisse der Versuchsreihen sind in der nachfolgenden Tabelle aufgeführt, wobei in der ersten Spalte der Pulsenergiedichtewert des von der Gasentladungslampe 25 abgestrahlten Blitzpuls für ein jeweiliges Glassubstrat 21 in J/cm² und in der zweiten Spalte der für die entsprechende Charge an Glassubstraten 21 ermittelte Mittelwert für deren Festigkeit in MPa angegeben sind.

| Pulsenergiedichte in J/cm² | Mittelwert der Festigkeit in MPa |
|---|---|
| 0 | 276,4 |
| 3,7 | 419,5 |
| 7,5 | 406,0 |
| 11,2 | 433,2 |
| 18,9 | 363,2 |

Der Tabelle kann entnommen werden, dass die mit dem erfindungsgemäßen Verfahren behandelten Glassubstrate 21 eine um mindestens 30 % höhere Festigkeit gegenüber unbehandelten Glassubstraten 21 aufweisen.

Erwähnt sei an dieser Stelle, dass bei den Ausführungsbeispielen benannte Glasarten, Glasdicken und Betriebsparameter lediglich beispielhaft dargelegt sind und dass diese den Umfang der Erfindung nicht beschränken.

## Patentansprüche

1. Verfahren zum Erhöhen der Festigkeit eines plattenförmigen oder bandförmigen Glassubstrates (11; 21), **dadurch gekennzeichnet, dass** das Glassubstrat (11; 21) mittels mindestens eines Pulses einer mittels einer Gasentladungslampe (15; 25) erzeugten elektromagnetischen Strahlung im Wellenlängenbereich von 180 nm bis 1100 nm beaufschlagt wird, wobei der mindestens eine Puls eine Strahlungsbandbreite von mindestens 100 nm und das Glassubstrat vor dem Einwirken des mindestens einen Pulses eine Temperatur von maximal 200 °C aufweisen und wobei die Pulsenergiedichte des mindestens einen Pulses der elektromagnetischen Strahlung im Bereich von 0,1 Jcm⁻² bis 100 Jcm⁻² eingestellt wird.

2. Verfahren nach Anspruch 1, **dadurch gekennzeichnet, dass** ein alkalihaltiges Silikatglas oder ein Borosilikatglas als Glassubstrat (11; 21) verwendet wird.

3. Verfahren nach Anspruch 1 oder 2, **dadurch gekennzeichnet, dass** ein Glassubstrat (11; 21) mit einer Dicke von maximal 24 mm verwendet wird.

4. Verfahren nach einem der vorhergehenden Ansprüche, **dadurch gekennzeichnet, dass** die elektromagnetische Strahlung mittels einer Xenon-Blitzlampe (15; 25) erzeugt wird.

5. Verfahren nach einem der vorhergehenden Ansprüche, **dadurch gekennzeichnet, dass** die Dauer des mindestens einen Pulses der elektromagnetischen Strahlung im Bereich von 0,2 ms bis 100 ms eingestellt wird.

6. Verfahren nach einem der vorhergehenden Ansprüche, **dadurch gekennzeichnet, dass** hinter dem Glassubstrat und/oder hinter der Einrichtung zum Erzeugen des mindestens einen Pulses der elektromagnetischen Strahlung ein Reflektor (26) für die elektromagnetische Strahlung angeordnet wird.

## Claims

1. Method for increasing the strength of a sheet-like or ribbon-like glass substrate (11; 21), **characterized in that** at least one pulse of electromagnetic radiation in the wavelength range of 180 nm to 1100 nm, produced by means of a gas discharge lamp (15; 25), is applied to the glass substrate (11; 21), the at least one pulse having a radiation bandwidth of at least 100 nm and the glass substrate having a temperature of no more than 200°C before the action of the at least one pulse, and the pulse energy density of the at least one pulse of electromagnetic radiation being set in the range from 0.1 Jcm⁻² to 100 Jcm⁻².

2. Method according to Claim 1, **characterized in that** an alkali metal-containing silicate glass or borosilicate glass is used as a glass substrate (11; 21).

3. Method according to Claim 1 or 2, **characterized in that** a glass substrate (11; 21) with a thickness of no more than 24 mm is used.

4. Method according to any of the preceding claims, **characterized in that** the electromagnetic radiation is produced by means of a xenon flash bulb (15; 25).

5. Method according to any of the preceding claims, **characterized in that** the duration of the at least one pulse of electromagnetic radiation is set in the range from 0.2 ms to 100 ms.

6. Method according to any of the preceding claims, **characterized in that** a reflector (26) for the electromagnetic radiation is arranged behind the glass substrate and/or behind the device for producing the at least one pulse of electromagnetic radiation.

## Revendications

1. Procédé d'augmentation de la résistance d'un substrat de verre (11 ; 21) en forme de plaque ou de bande, **caractérisé en ce que** le substrat de verre (11 ; 21) est soumis à au moins une impulsion d'un rayonnement électromagnétique, généré au moyen d'une lampe à décharge gazeuse (15 ; 25), dans la gamme de longueurs d'onde de 180 nm à 1100 nm, l'au moins une impulsion ayant une largeur de bande de rayonnement d'au moins 100 nm et le substrat de verre ayant une température de 200 °C maximum avant l'action de l'au moins une impulsion et la densité d'énergie d'impulsion de ladite au moins une impulsion du rayonnement électromagnétique étant réglée dans la gamme de 0,1 Jcm⁻² à 100 Jcm⁻².

2. Procédé selon la revendication 1, **caractérisé en ce qu'**un verre silicaté alcalin ou un verre borosilicaté est utilisé comme substrat en verre (11 ; 21) .

3. Procédé selon la revendication 1 ou 2, **caractérisé en ce que** le substrat de verre (11 ; 21) utilisé a une épaisseur maximale de 24 mm.

4. Procédé selon l'une des revendications précédentes, **caractérisé en ce que** le rayonnement électromagnétique est généré au moyen d'une lampe flash au xénon (15 ; 25).

5. Procédé selon l'une des revendications précédentes, **caractérisé en ce que** la durée de l'au moins une impulsion du rayonnement électromagnétique est réglée dans la gamme de 0,2 ms à 100 ms.

6. Procédé selon l'une des revendications précédentes, **caractérisé en ce qu'**un réflecteur (26) destiné au rayonnement électromagnétique est disposé derrière le substrat de verre et/ou derrière le dispositif destiné à générer l'au moins une impulsion du rayonnement électromagnétique.
